# EUROPÄISCHE PATENTSCHRIFT

(11) **EP 1 791 022 B1**
(45) Veröffentlichungstag und Bekanntmachung des Hinweises auf die Patenterteilung: **04.02.2009**
(21) Anmeldenummer: 05111252.2
(22) Anmeldetag: 24.11.2005
(51) Int. Cl.: G03B 42/04

(54) **Kassette für eine Speicherleuchtstoffplatte sowie Vorrichtung zur Entnahme der Speicherleuchtstoffplatte aus der Kassette**
Cassette for a phosphor storage plate and device for removing the phosphor storage plate from the cassette
Cassette destinée à un disque fluorescent de mémoire tout comme dispositif destiné à la prise du disque fluorescent de mémoire à partir de la cassette

(43) Veröffentlichungstag der Anmeldung: 30.05.2007
(73) Patentinhaber: Agfa-Gevaert HealthCare GmbH, 51373 Leverkusen (DE)
(72) Erfinder: Hartmann, Thomas Dr., 82449 Uffing an Staffelsee (DE); Kastl, Alfons, 85653 Aying (DE); Schindlbeck, Günther, 81545 München (DE); Loistl, Rudolf, 82008 Unterhaching (DE); Ketterer, Hans, 85640 Putzbrunn (DE); Butz, Otto, 85375 Neufahrn (DE); Heinz, Jürgen, 87616 Marktoberdorf (DE); Pirmann, Anton, 81243 München (DE)

(56) Entgegenhaltungen:
- US-A- 3 286 092
- US-A- 3 652 853
- US-A- 4 493 417
- US-A- 4 931 641
- US-A1- 2004 251 596
- US-B1- 6 693 728

## Beschreibung

Die Erfindung betrifft eine Kassette für eine Speicherleuchtstoffplatte gemäß dem Oberbegriff des Anspruchs 1. Die Erfindung betrifft außerdem eine entsprechende Vorrichtung zur Entnahme der Speicherleuchtstoffplatte aus der Kassette nach Anspruch 8.

Eine Möglichkeit zur Aufzeichnung von Röntgenbildern besteht darin, die durch ein Objekt, beispielsweise einen Patienten, hindurch tretende Röntgenstrahlung als latentes Bild in einer so genannten Speicherleuchtstoffschicht zu speichern. Zum Auslesen des latenten Bildes wird die Speicherleuchtstoffschicht mit Stimulationslicht bestrahlt und dabei zur Aussendung von Emissionslicht angeregt. Das Emissionslicht, dessen Intensität dem in der Speicherleuchtstoffschicht gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden.

Die Patentanmeldung US 2004/0251596 A1 offenbart eine Kassette mit einer innerhalb der Kassette beweglichen Auflage, auf welcher sich eine flexible Speicherleuchtstoffplatte befindet. Zu Beginn der Entnahme der Speicherleuchtstoffplatte aus der Kassette wird die Kassette durch Aufklappen einer Verschlussklappe geöffnet und die Auflage innerhalb der Kassette in Richtung der Kassettenöffnung befördert, bis sie schließlich an ein im Bereich der Kassettenöffnung am Kassettenboden angeordnetes Führungselement stößt, durch welches sie nach unten gedrückt wird und sich dadurch von der Speicherleuchtstoffplatte löst. Die Speicherleuchtstoffplatte wird anschließend von einem nicht näher beschriebenen Mechanismus aus dem Inneren der Kassette herausgezogen und einer Ausleseeinrichtung zugeführt. Während des Transports innerhalb der Kassette wird die Auflage durch Gleit- oder Rollenlager entlang des inneren Kassettenrandes geführt.

Der für die Entnahme der Speicherleuchtstoffplatte erforderliche Mechanismus der oben beschriebenen Kassette ist relativ aufwändig. Darüber hinaus kann die Speicherleuchtstoffplatte bei geöffneter Verschlussklappe aus der Kassette herausfallen, wenn die Kassette schräg oder vertikal orientiert ist.

Aus US 3,652,853 und US 3,286,092 sind Kassetten bekannt, bei denen ein Röntgenfilm in der Kassette zwischen zwei Trägerplatten gehalten wird. Um eine Entnahme des Röntgenfilms aus der Kassette zu ermöglichen, wird der Abstand der beiden Trägerplatten zueinander vergrößert.

Es ist Aufgabe der vorliegenden Erfindung, eine möglichst einfach aufgebaute Kassette für eine Speicherleuchtstoffplatte sowie eine entsprechende Vorrichtung zur Entnahme der Speicherleuchtstoffplatte aus der Kassette anzugeben, wobei insbesondere ein unbeabsichtigtes Herausfallen der Speicherleuchtstoffplatte bei geöffneter Verschlussklappe auf einfache Weise verhindert werden kann.

Diese Aufgabe wird gemäß Anspruch 1 bzw. 8 dadurch gelöst, dass die Auflage zusammen mit der darauf liegenden Speicherleuchtstoffplatte durch die Öffnung des Kassettengehäuses hindurch zumindest teilweise aus dem Inneren des Kassettengehäuses herausbewegt werden kann und die auf der Auflage liegende Speicherleuchtstoffplatte von der Auflage genommen werden kann, wenn sich die Auflage mit der darauf liegenden Speicherleuchtstoffplatte zumindest teilweise außerhalb des Kassettengehäuses befindet.

Dadurch, dass die Auflage zusammen mit der Speicherleuchtstoffplatte zumindest zum Teil aus der Kassette herausgeführt wird, kann der im oben genannten Stand der Technik beschriebene aufwändige Mechanismus, bei welchem die Auflage lediglich innerhalb der Kassette beweglich ist, erheblich vereinfacht werden. Darüber hinaus kann die teilweise außerhalb der Kassette befindliche Speicherleuchtstoffplatte auf einfachere Weise, z. B. durch angetriebene Transportwalzen oder Ähnliches, von der Auflage genommen und zu einer Ausleseeinrichtung transportiert werden.

Bei der erfindungsgemäßen Kassette ist außerdem vorgesehen, dass die Auflage mindestens ein Fixierelement aufweist, welches die Speicherleuchtstoffplatte auf der Auflage fixiert, wenn sich die Auflage mit der darauf liegenden Speicherleuchtstoffplatte innerhalb des Kassettengehäuses befindet. Gleichzeitig gibt das Fixierelement die Speicherleuchtstoffplatte frei, wenn sich die Auflage mit der darauf liegenden Speicherleuchtstoffplatte zumindest teilweise außerhalb des Kassettengehäuses befindet, so dass die Speicherleuchtstoffplatte von der Auflage genommen werden kann. Diese Ausgestaltung der Erfindung basiert auf dem Gedanken, eine Fixierung der Speicherleuchtstoffplatte in der Kassette nicht durch eine an der Kassettenöffnung vorgesehene Verschlussklappe zu erreichen, sondern durch ein an der Auflage befindliches, bewegliches Fixierelement. Hierdurch wird gewährleistet, dass die in der Kassette befindliche Speicherleuchtstoffplatte nicht aus der Kassette fallen kann, wenn bei einer schrägen oder vertikalen Stellung der Kassette die Verschlussklappe geöffnet ist.

Erfindungsgemäß ist außerdem vorgesehen, dass das Fixierelement in der Auflage versenkt wird, wenn sich die Auflage mit der darauf liegenden Speicherleuchtstoffplatte zumindest teilweise außerhalb des Kassettengehäuses befindet, so dass die Speicherleuchtstoffplatte freigegeben wird. Durch das Versenken des Fixierelementes in der Auflage wird erreicht, dass die freigegebene Speicherleuchtstoffplatte auf einfache Weise, insbesondere ohne diese anheben zu müssen, von der Auflage genommen, insbesondere in einer Richtung parallel zur Ebene der Auflage abgezogen, werden kann.

Vorzugsweise umfasst das Fixierelement eine Blattfeder, welche in der Ebene der Auflage angeordnet ist und einen Vorsprung aufweist, der über die Ebene der Auflage hinausragen kann. Insbesondere verläuft der Vorsprung im Wesentlichen senkrecht zur Ebene der Auflage. Hierdurch lässt sich das erfindungsgemäße Fixierelement auf besonders einfache und zuverlässige Weise realisieren.

Es ist außerdem bevorzugt, dass die Blattfeder aus einem Teilbereich der Auflage gebildet wird. Hierdurch können Auflage und Fixierelement in einem einzigen Herstellungsschritt und/oder einstückig und daher besonders kostengünstig hergestellt werden.

Vorzugsweise ist die Blattfeder derart gegen die Auflage vorgespannt, dass der Vorsprung aus der Ebene der Auflage herausragt und dabei die Speicherleuchtstoffplatte auf der Auflage fixiert, wenn sich die Auflage innerhalb des Kassettengehäuses befindet, und der Vorsprung in der Auflage versenkt ist, wenn sich die Auflage mit der darauf liegenden Speicherleuchtstoffplatte zumindest teilweise außerhalb des Kassettengehäuses befindet. Durch die beschriebene Vorspannung der Blattfeder wird auf eine besonders einfache Weise die Fixierung bzw. Freigabe der Speicherleuchtstoffplatte auf der Auflage ermöglicht.

In einer Ausgestaltung dieser Variante ist ein Andrückelement vorgesehen, durch welches die vorgespannte Blattfeder derart in Richtung auf die Auflage gedrückt wird, dass der Vorsprung aus der Ebene der Auflage herausragt, wenn sich die Auflage innerhalb des Kassettengehäuses befindet. Das Andrückelement befindet sich hierbei vorzugsweise am Boden des Kassettengehäuses unterhalb der Auflage oder wird durch den Boden des Kassettengehäuses selbst gebildet.

Es ist außerdem bevorzugt, dass die Auflage mindestens eine Aussparung aufweist, durch welche hindurch eine Transporteinrichtung auf die auf der Auflage liegende Speicherleuchtstoffplatte zugreifen und dabei die Speicherleuchtstoffplatte von der Auflage nehmen, insbesondere in einer Richtung parallel zur Ebene der Auflage abziehen, kann. Hierdurch kann auf einfache Weise die Speicherleuchtstoffplatte von der Auflage genommen werden.

Vorzugsweise umfasst die Transporteinrichtung mindestens ein Walzenpaar mit einer ersten und einer zweiten Walze, wobei die erste Walze durch die Ausnehmung von unten auf die Speicherleuchtstoffplatte drückt und die zweite Walze von oben auf die Speicherleuchtstoffplatte drückt. Die erste und/oder zweite Walze ist mechanisch angetrieben.

Weitere bevorzugte Ausführungsbeispiele sind in den Figuren dargestellt. Es zeigen:
- Fig. 1a) bis 1e):: eine schematische Seitenansicht (Querschnitt) der erfindungsgemäßen Kassette in unterschiedlichen Phasen während der Entnahme der Speicherleuchtstoffplatte;
- Fig. 2:: einen Querschnitt durch die Kassette, wenn sich die Auflage zusammen mit der Speicherleuchtstoffplatte innerhalb der Kassette befindet;
- Fig. 3:: einen Querschnitt durch die Kassette, wenn sich die Auflage zusammen mit der darauf befindlichen Speicherleuchtstoffplatte teilweise außerhalb der Kassette befindet;
- Fig. 4: ein Beispiel für eine Auflage in Draufsicht; und
- Fig. 5:: eine detaillierte Darstellung eines Querschnitts der erfindungsgemäßen Kassette in Seitenansicht.

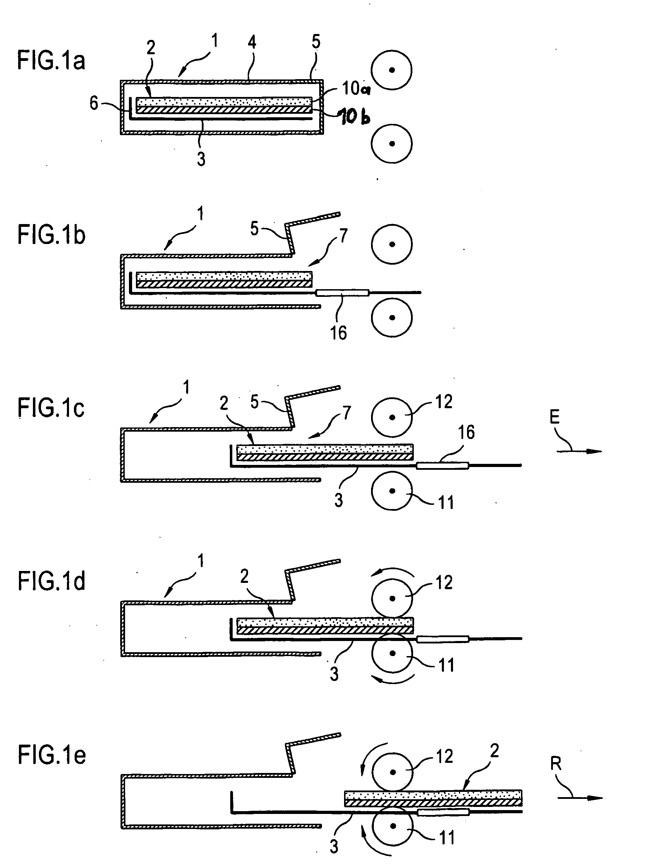

Die Fig. 1a) bis 1e) zeigen eine erfindungsgemäße Kassette 1 in unterschiedlichen Phasen während der Entnahme einer Speicherleuchtstoffplatte 2. Die Kassette 1 umfasst ein Kassettengehäuse 4 mit einer Öffnung, welche durch eine schwenkbare Verschlussklappe 5 lichtdicht verschlossen wird. Im Inneren des Kassettengehäuses 4 befindet sich eine ebene Auflage 3, auf welcher die Speicherleuchtstoffplatte 2 liegt.

Die Speicherleuchtstoffplatte 2 besteht im Wesentlichen aus einer Speicherleuchtstoffschicht 10a, die auf einem Substrat 10b aufgebracht ist. Bei der Speicherleuchtstoffschicht 10a handelt es sich beispielsweise um pulverförmige Speicherleuchtstoffpartikel, die mit Hilfe eines geeigneten Bindemittels auf das Substrat 10b aufgebracht werden. Alternativ kann die Speicherleuchtstoffschicht 10a aus einer Vielzahl von nadelförmigen Leuchtstoffstrukturen bestehen, welche vorzugsweise durch Aufdampfen auf dem Substrat 10b erzeugt werden. Die entsprechenden Speicherleuchtstoffplatten werden daher auch als Powder Image Plates (PIP) bzw. Needle Image Plates (NIP) bezeichnet.

Bei dem Substrat 10b handelt es sich vorzugsweise um eine dünne, flexible Folie aus einem für Röntgenstrahlung durchlässigen Material, wie z. B. Kunststoff. Die Speicherleuchtstoffplatte 2 liegt mit ihrem Substrat 10b lose auf der Auflage 3 und wird im Wesentlichen durch Reibungskräfte und/oder Formschluss, z. B. durch ein oder mehrere Umrandungselemente 6 und/oder Fixierelemente auf der Auflage 3 gehalten.

In Fig. 1b) ist eine erste Phase des Entnahmevorgangs dargestellt, in welcher die stirnseitige Öffnung 7 der Kassette 1 durch Hochklappen einer schwenkbaren Verschlussklappe 5 freigegeben wird. Eine Entnahmeeinrichtung 16 greift am Rand der Auflage 3 an und befördert diese, wie in Fig. 1c) dargestellt, zusammen mit der darauf befindlichen Speicherleuchtstoffplatte 2 aus der Kassette 1 heraus in Richtung E in den Bereich einer Transporteinrichtung, welche in dem dargestellten Beispiel eine erste und zweite Transportwalze 11 bzw. 12 umfasst.

In der in Fig. 1d) dargestellten Phase des Entnahmevorgangs liegen die Transportwalzen 11 und 12 zu beiden Seiten der Speicherleuchtstoffplatte 2 an dieser an und können diese, wie in Fig. 1e) dargestellt, in Richtung R von der Auflage 3 abziehen.

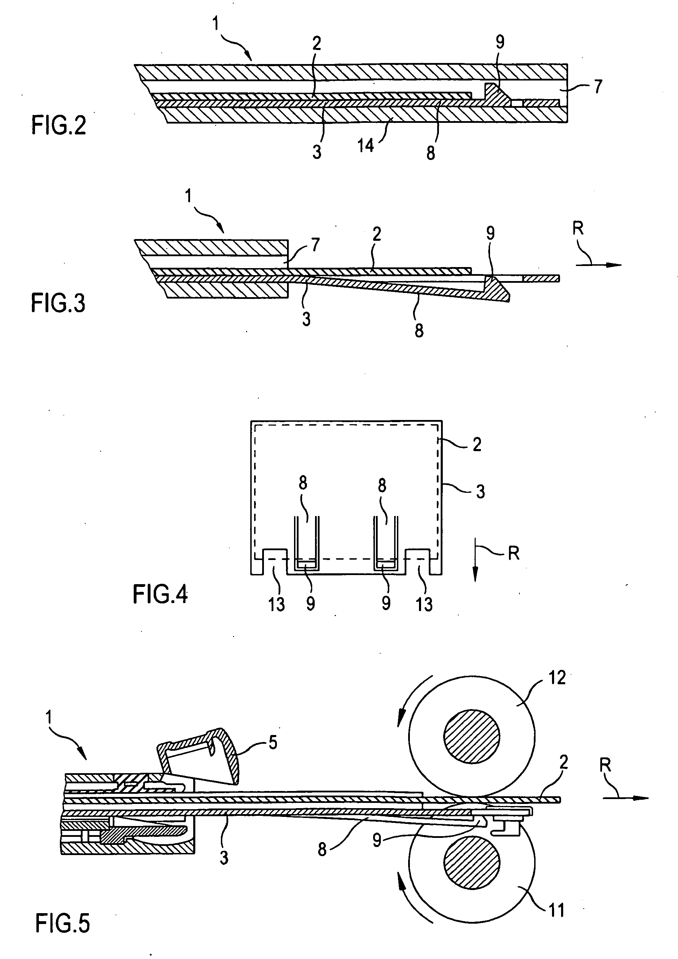

Fig. 2 zeigt einen Ausschnitt eines Querschnitts durch die erfindungsgemäße Kassette 1, wenn sich die Auflage 3 zusammen mit der Speicherleuchtstoffplatte 2 vollständig innerhalb der Kassette 1 befindet. In der hier dargestellten bevorzugten Ausgestaltung der Erfindung befindet sich in der Ebene der Auflage 3 eine Blattfeder 8, welche einen aus der Ebene der Auflage 3 herausragenden Vorsprung 9 aufweist. Der Vorsprung 9 verhindert, dass die Speicherleuchtstoffplatte 2 bei geöffneter Verschlussklappe (hier nicht dargestellt) durch die Öffnung 7 des Kassettengehäuses 4 aus der Kassette 1 herausfallen kann, wenn sich die Kassette in einer vertikalen oder schrägen Stellung befindet.

Fig. 3 zeigt einen Ausschnitt eines Querschnitts durch die Kassette, wenn sich ein Teil der Auflage 3 zusammen mit der darauf befindlichen Speicherleuchtstoffplatte 2 außerhalb der Kassette 1 befindet. In diesem Zustand tritt die Blattfeder 8 nach unten aus der Ebene der Auflage 3 heraus. Der an der Blattfeder 8 befindliche Vorsprung wird dadurch ebenfalls nach unten abgesenkt und aus der Ebene der Auflage 3 heraus bewegt. Die Speicherleuchtstoffplatte 2 wird dadurch freigegeben und kann in Richtung R von der Auflage 3 abgezogen werden.

Wie aus den Figuren 2 und 3 ersichtlich ist, ist die Blattfeder 8 derart vorgespannt, dass der Vorsprung 9 nach unten aus der Ebene der Auflage 3 herausbewegt wird, wenn sich diese zumindest teilweise außerhalb der Kassette 1 befindet, und wieder in die Ebene der Auflage 3 hineinbewegt wird, wenn sich die Auflage 3 innerhalb der Kassette 1 befindet. Die Blattfeder 8 wird hierbei durch den Kassettenboden 14 selbst oder ein am Kassettenboden 14 angeordnetes Andrückelement (nicht dargestellt) in Richtung der Ebene der Auflage 3 gedrückt.

Fig. 4 zeigt ein Beispiel der Auflage 3 in Draufsicht. Die auf der Auflage 3 liegende Speicherleuchtstoffplatte 2 ist mit gestrichelten Linien angedeutet. Die Auflage 3 weist zwei Blattfedern 8 auf, deren Vorsprünge 9 die Speicherleuchtstoffplatte 2 auf der Auflage 3 fixieren, wenn sich diese innerhalb der Kassette befindet (wie anhand der Figuren 2 und 3 beschrieben). Ein Herausfallen der Speicherleuchtstoffplatte 2 aus der geöffneten Kassette wird hierdurch auf einfache und zuverlässige Weise verhindert.

Die Auflage 3 ist vorzugsweise aus einem für Röntgenstrahlung durchlässigen Material, insbesondere Kunststoff, hergestellt. Die Blattfedern 8 sind insbesondere aus demselben Material wie die Auflage 3 und können in einem Herstellungsschnitt, z.B. im Spritzgussverfahren, zusammen mit der Auflage 3 hergestellt werden. Alternativ können die Blattfedern 8 aber auch nach der Herstellung der Auflage 3 durch Aussägen aus der Auflage 3 erhalten werden. Die oben erwähnte Vorspannung der Blattfedern 8 kann im letztgenannten Fall durch Erwärmung und entsprechende Verformung der Blattfedern 8 realisiert werden.

Befindet sich die Auflage 3 zusammen mit der darauf liegenden Speicherleuchtstoffplatte 2 teilweise außerhalb der Kassette (siehe Fig. 3), so senken sich die Blattfedern 8 zusammen mit den darauf befindlichen Vorsprüngen 9 senkrecht zur Zeichenebene ab und geben die Speicherleuchtstoffplatte 2 frei, so dass diese in Richtung R von der Auflage 3 abgezogen und zu einer Ausleseeinrichtung transportiert werden kann.

Die Speicherleuchtstoffplatte 2 wird im dargestellten Beispiel von angetriebenen Transportwalzen 11 und 12 (siehe Fig. 1e) von der Auflage 3 abgezogen. Hierzu weist die Auflage 3 Aussparungen 13 auf, durch welche hindurch die jeweils unterhalb der Auflage 3 befindliche erste Transportwalze 11 auf die Speicherleuchtstoffplatte 2 zugreifen kann. Gegenüber der ersten Transportwalze 11 drückt die zweite Transportwalze 12 von oben auf die Speicherleuchtstoffplatte 2. Zumindest eine der beiden Transportwalzen 11 bzw. 12 ist angetrieben und sorgt für einen Abtransport der Speicherleuchtstoffplatte von der Auflage 3 in Richtung R.

Fig. 5 zeigt eine detaillierte Darstellung eines Querschnitts der erfindungsgemäßen Kassette 1 bei geöffneter Verschlussklappe 5 in Seitenansicht. Die Auflage 3 befindet sich zusammen mit der darauf befindlichen Speicherleuchtstoffplatte 2 teilweise außerhalb der geöffneten Kassette 1, wobei der Vorsprung 9 durch die Blattfeder 8 aus der Ebene der Auflage heraus bewegt ist und die Speicherleuchtstoffplatte 2 freigibt, welche von der ersten und zweiten Transportwalze 11 bzw. 12 in Richtung R von der Auflage 3 abgezogen wird. Die erste Transportwalze 11 tritt hierbei durch eine der Aussparungen 13 (Fig. 4) durch die Auflage 3 hindurch und drückt auf die Unterseite der Speicherleuchtstoffplatte 2.

## Patentansprüche

1. Kassette (1) für eine Speicherleuchtstoffplatte (2), umfassend
- ein Kassettengehäuse (4) mit einer Öffnung (7) und
- eine innerhalb des Kassettengehäuses (4) beweglich angeordnete Auflage (3), auf welcher die Speicherleuchtstoffplatte (2) aufliegt, wobei
- die Auflage (3) zusammen mit der darauf liegenden Speicherleuchtstoffplatte (2) durch die Öffnung (7) des Kassettengehäuses (4) hindurch zumindest teilweise aus dem Inneren des Kassettengehäuses (4) heraus bewegt werden kann, und
- die auf der Auflage (3) liegende Speicherleuchtstoffplatte (2) von der Auflage (3) genommen werden kann, wenn sich die Auflage (3) mit der darauf liegenden Speicherleuchtstoffplatte (2) zumindest teilweise außerhalb des Kassettengehäuses (4) befindet, **dadurch gekennzeichnet, dass**
- die Auflage (3) mindestens ein Fixierelement (8, 9) aufweist, welches die Speicherleuchtstoffplatte (2) auf der Auflage (3) fixiert, wenn sich die Auflage (3) mit der darauf liegenden Speicherleuchtstoffplatte (2) innerhalb des Kassettengehäuses (4) befindet, und freigibt, wenn sich die Auflage (3) mit der darauf liegenden Speicherleuchtstoffplatte (2) zumindest teilweise außerhalb des Kassettengehäuses (4) befindet, so dass die Speicherleuchtstoffplatte (2) von der Auflage (3) genommen werden kann, und
- das Fixierelement (8, 9) in der Auflage (3) versenkt wird, wenn sich die Auflage (3) mit der darauf liegenden Speicherleuchtstoffplatte (2) zumindest teilweise außerhalb des Kassettengehäuses (4) befindet, so dass die Speicherleuchtstoffplatte (2) freigegeben wird.

2. Kassette nach Anspruch 1, wobei das Fixierelement eine Blattfeder (8) umfasst, welche in der Ebene der Auflage (3) angeordnet ist und einen Vorsprung (9) aufweist, welcher über die Ebene der Auflage (3) hinausragen kann.

3. Kassette nach Anspruch 2, wobei die Blattfeder (8) aus einem Teilbereich der Auflage (3) gebildet wird.

4. Kassette nach Anspruch 2 oder 3, wobei die Blattfeder (8) derart gegen die Auflage (3) vorgespannt ist, dass der Vorsprung (9)
- aus der Ebene der Auflage (3) heraus ragt und dabei die Speicherleuchtstoffplatte (2) auf der Auflage (3) fixiert, wenn sich die Auflage (3) innerhalb des Kassettengehäuses (4) befindet, und
- in der Auflage (3) versenkt ist, wenn sich die Auflage (3) mit der darauf liegenden Speicherleuchtstoffplatte (2) zumindest teilweise außerhalb des Kassettengehäuses (4) befindet.

5. Kassette nach Anspruch 4, wobei ein Andrückelement vorgesehen ist, durch welches die vorgespannte Blattfeder (8) derart in Richtung auf die Auflage (3) drückt, dass der Vorsprung aus der Ebene der Auflage (3) heraus ragt, wenn sich die Auflage (3) innerhalb des Kassettengehäuses (4) befindet.

6. Kassette nach Anspruch 5, wobei das Andrückelement durch den Boden (14) des Kassettengehäuses gebildet wird oder am Boden (14) des Kassettengehäuses unterhalb der Auflage (3) angeordnet ist.

7. Kassette nach einem der vorangehenden Ansprüche, wobei die Auflage (3) mindestens eine Aussparung (13) aufweist, durch welche eine Transporteinrichtung (11) auf die auf der Auflage (3) liegende Speicherleuchtstoffplatte (2) zugreifen und dabei die Speicherleuchtstoffplatte (2) von der Auflage (3) nehmen kann.

8. Vorrichtung zur Entnahme einer Speicherleuchtstoffplatte (2) aus einer Kassette (1) mit
- einer Kassette (1) nach Anspruch 1,
- einer Entnahmeeinrichtung (16), welche die Auflage (3) zusammen mit der darauf liegenden Speicherleuchtstoffplatte (2) durch die Öffnung (7) des Kassettengehäuses (4) hindurch zumindest teilweise aus dem Inneren des Kassettengehäuses (4) heraus bewegen kann, und
- einer Transporteinrichtung (11, 12), welche die auf der Auflage (3) liegende Speicherleuchtstoffplatte (2) von der Auflage (3) nehmen kann, wenn sich die Auflage (3) mit der darauf liegenden Speicherleuchtstoffplatte (2) zumindest teilweise außerhalb des Kassettengehäuses (4) befindet.

9. Vorrichtung nach Anspruch 8, wobei die Auflage (3) mindestens eine Aussparung (13) aufweist, durch welche die Transporteinrichtung (11,12) auf die auf der Auflage (3) liegende Speicherleuchtstoffplatte (2) zugreifen kann und dabei die Speicherleuchtstoffplatte (2) von der Auflage (3) nehmen kann.

10. Vorrichtung nach Anspruch 9, wobei die Transporteinrichtung (11,12) mindestens ein Walzenpaar mit einer ersten und einer zweiten Walze (11 bzw. 12) umfasst, wobei die erste Walze (11) durch die Aussparung (13) von unten auf die Speicherleuchtstoffplatte (2) drückt und die zweite Walze (12) von oben auf die Speicherleuchtstoffplatte (2) drückt.

## Claims

1. A cassette (1) for a storage phosphor plate (2) comprising
- a cassette housing (4) with an opening (7) and
- a support (3), disposed moveably within the cassette housing (4), on which the storage phosphor plate (2) lies,
- it being possible to move the support (3), together with the storage phosphor plate (2) lying on top of it, at least partially out from the inside of the cassette housing (4) through the opening (7) in the cassette housing (4), and
- it being possible to take the storage phosphor plate (2) lying on top of the support (3) from the support (3) when the support (3) with the storage phosphor plate (2) lying on top of it is located at least partially outside of the cassette housing (4),
**characterised in that**
- the support (3) has at least one fixing element (8, 9) which fixes the storage phosphor plate (2) on the support (3) when the support (3) with the storage phosphor plate (2) lying on top of it is located within the cassette housing (4), and releases it when the support (3) with the storage phosphor plate (2) lying on top of it is located at least partially outside of the cassette housing (4) so that the storage phosphor plate (2) can be taken from the support (3), and
- the fixing element (8, 9) is sunk into the support (3) when the support (3) with the storage phosphor plate (2) lying on top of it is located at least partially outside of the cassette housing (4) so that the storage phosphor plate (2) is released.

2. The cassette according to Claim 1, the fixing element comprising a flat spring (8) which is disposed in the plane of the support (3) and has a projection (9) which can project over the plane of the support (3).

3. The cassette according to Claim 2, the flat spring (8) being formed by a partial region of the support (3).

4. The cassette according to Claim 2 or 3, the flat spring (8) being pretensioned against the support (3) such that the projection (9)
- projects out of the plane of the support (3) and thus fixes the storage phosphor plate (2) on the support (3) when the support (3) is located within the cassette housing (4), and
- is sunk into the support (3) when the support (3) with the storage phosphor plate (2) lying on top of it is located at least partially outside of the cassette housing (4).

5. The cassette according to Claim 4, a pushing element being provided by means of which the pretensioned flat spring (8) pushes towards the support (3) such that the projection projects out of the plane of the support (3) when the support (3) is located within the cassette housing (4).

6. The cassette according to Claim 5, the pushing element being formed by the base (14) of the cassette housing or being disposed on the base (14) of the cassette housing beneath the support (3).

7. The cassette according to any of the preceding claims, the support (3) having at least one recess (13) by means of which a conveyance device (11) can access the storage phosphor plate (2) lying on the support (3) and can thus take the storage phosphor plate (2) from the support (3).

8. An apparatus for removing a storage phosphor plate (2) from a cassette (1) with
- a cassette (1) according to Claim 1,
- a removal device (16) which can move the support (3), together with the storage phosphor plate (2) lying on top of it, at least partially out from the inside of the cassette housing (4) through the opening (7) in the cassette housing (4), and
- a conveyance device (11, 12) which can take the storage phosphor plate (2) lying on the support (3) from the support (3) when the support (3) with the storage phosphor plate (2) lying on top of it is located at least partially outside of the cassette housing (4).

9. The apparatus according to Claim 8, the support (3) having at least one recess (13) by means of which the conveyance device (11, 12) can access the storage phosphor plate (2) lying on the support (3) and can thus take the storage phosphor plate (2) from the support (3).

10. The apparatus according to Claim 9, the conveyance device (11, 12) comprising at least one mating roll with a first and a second roll (11 and 12), the first roll (11) pushing by means of the recess (13) from below onto the storage phosphor plate (2) and the second roll (12) pushing from above onto the storage phosphor plate (2).

## Revendications

1. Cassette (1) pour disque fluorescent de mémoire (2), comprenant
- un boîtier de cassette (4) présentant une ouverture (7) et
- une surface d'appui (3) mobile à l'intérieur du boîtier de cassette (4), sur laquelle repose le disque fluorescent de mémoire (2),
dans laquelle
- la surface d'appui (3) conjointement au disque fluorescent de mémoire (2) reposant sur celle-ci est susceptible de sortir de l'intérieur du boîtier de cassette (4), au moins partiellement, par l'ouverture (7) du boîtier de cassette (4), et
- le disque fluorescent de mémoire (2) reposant sur la surface d'appui (3) peut être retiré de cette surface d'appui (3) lorsque la surface d'appui (3) supportant le disque fluorescent de mémoire (2) se trouve au moins partiellement en dehors du boîtier de cassette (4),
**caractérisée en ce que**
- la surface d'appui (3) présente au moins un élément de fixation (8, 9) qui sert à fixer le disque fluorescent de mémoire (2) sur la surface d'appui (3) lorsque la surface d'appui (3) supportant le disque fluorescent de mémoire (2) se trouve à l'intérieur du boîtier de cassette (4), et à l'en dégager lorsque la surface d'appui (3) supportant le disque fluorescent de mémoire (2) se trouve au moins partiellement en dehors du boîtier de cassette (4), de sorte que le disque fluorescent de mémoire (2) puisse être retiré de la surface d'appui (3), et
- l'élément de fixation (8, 9) est renfoncé dans la surface d'appui (3) lorsque la surface d'appui (3) supportant le disque fluorescent de mémoire (2) se trouve au moins partiellement en dehors du boîtier de cassette (4), de sorte que le disque fluorescent de mémoire (2) soit susceptible d'être dégagé.

2. Cassette selon la revendication 1, dans laquelle l'élément de fixation comprend un ressort à lame (8) qui est placé dans le plan de la surface d'appui (3) et qui présente une saillie (9) qui peut dépasser au-dessus du plan de la surface d'appui (3).

3. Cassette selon la revendication 2, dans laquelle le ressort à lame (8) est formé par une zone partielle de la surface d'appui (3).

4. Cassette selon la revendication 2 ou 3, dans laquelle le ressort à lame (8) est précontraint contre la surface d'appui (3) de sorte que la saillie (9)
- dépasse du plan de la surface d'appui (3) et fixe ainsi le disque fluorescent de mémoire (2) sur la surface d'appui (3) lorsque la surface d'appui (3) se trouve à l'intérieur du boîtier de cassette (4), et
- soit renfoncée dans la surface d'appui (3) lorsque la surface d'appui (3) supportant le disque fluorescent de mémoire (2) se trouve au moins partiellement en dehors du boîtier de cassette (4).

5. Cassette selon la revendication 4, dans laquelle il est prévu un élément de pression qui exerce une pression sur le ressort à lame (8) précontraint dirigée sur la surface d'appui (3) de sorte que la saillie dépasse du plan de la surface d'appui (3) lorsque la surface d'appui (3) se trouve à l'intérieur du boîtier de cassette (4).

6. Cassette selon la revendication 5, dans laquelle l'élément de pression est formé par le fond (14) du boîtier de cassette ou est placé au fond (14) du boîtier de cassette en dessous de la surface d'appui (3).

7. Cassette selon l'une des revendications précédentes, dans laquelle la surface d'appui (3) présente au moins un évidement (13) grâce auquel un dispositif de transport (11) peut accéder au disque fluorescent de mémoire (2) reposant sur la surface d'appui (3) et peut ainsi retirer le disque fluorescent de mémoire (2) de la surface d'appui (3).

8. Dispositif permettant de retirer un disque fluorescent de mémoire (2) d'une cassette (1) comportant
- une cassette (1) selon la revendication 1,
- un dispositif de prise (16) susceptible de faire sortir de l'intérieur du boîtier de cassette (4), au moins partiellement, la surface d'appui (3) conjointement au disque fluorescent de mémoire (2) reposant sur celle-ci, par l'ouverture (7) du boîtier de cassette (4), et
- un dispositif de transport (11, 12) susceptible de retirer de la surface d'appui (3) le disque fluorescent de mémoire (2) reposant sur la surface d'appui (3) lorsque la surface d'appui (3) supportant le disque fluorescent de mémoire (2) se trouve au moins partiellement en dehors du boîtier de cassette (4).

9. Dispositif selon la revendication 8, dans laquelle la surface d'appui (3) présente au moins un évidement (13), grâce auquel le dispositif de transport (11, 12) peut accéder au disque fluorescent de mémoire (2) reposant sur la surface d'appui (3) et peut ainsi retirer le disque fluorescent de mémoire (2) de la surface d'appui (3).

10. Dispositif selon la revendication 9, dans laquelle le dispositif de transport (11, 12) comprend au moins une paire de rouleaux comportant un premier et un second rouleau (11 et 12), le premier rouleau (11) exerçant une pression sur le dessous du disque fluorescent de mémoire (2) par l'intermédiaire de l'évidement (13) et le second rouleau (12) exerçant une pression sur le dessus du disque fluorescent de mémoire (2).
